# EUROPÄISCHE PATENTSCHRIFT

(11) **EP 1 573 176 B1**
(45) Veröffentlichungstag und Bekanntmachung des Hinweises auf die Patenterteilung: **15.08.2007**
(21) Anmeldenummer: 03767676.4
(22) Anmeldetag: 27.11.2003
(51) Int. Cl.: F01L 1/34, F01L 1/053, F01L 1/46, F01L 1/344

(54) **BRENNKRAFTMASCHINE MIT EINER VORRICHTUNG ZUR HYDRAULISCHEN DREHWINKELVERSTELLUNG IHRER NOCKENWELLE GEGEN BER IHRER KURBELWELLE SOWIE MIT EINER VAKUUMPUMPE FÜR EINEN SERVOVERBRAUCHER, INSBESONDERE FÜR EINEN BREMSKRAFTVERSTÄRKER**
INTERNAL COMBUSTION ENGINE COMPRISING A DEVICE FOR HYDRAULICALLY ADJUSTING THE ANGLE OF ROTATION OF THE CAMSHAFT THEREOF RELATIVE TO THE CRANKSHAFT THEREOF, AND A VACUUM PUMP FOR A SERVO CONSUMER, ESPECIALLY A BRAKE BOOSTER
MOTEUR A COMBUSTION INTERNE COMPORTANT UN DISPOSITIF DE REGLAGE HYDRAULIQUE DE L'ANGLE DE ROTATION DE L'ARBRE A CAMES PAR RAPPORT AU VILEBREQUIN AINSI QU'UNE POMPE A VIDE DESTINEE A UN SERVORECEPTEUR NOTAMMENT CON U POUR UN AMPLIFICATEUR DE FREINAGE

(30) Priorität: 21.12.2002 DE 10260546
(43) Veröffentlichungstag der Anmeldung: 14.09.2005
(60) Teilanmeldung: 07110573.8
(73) Patentinhaber: Schaeffler KG, 91074 Herzogenaurach (DE)
(72) Erfinder: DIETZ, Joachim, 96158 Frensdorf (DE)
(86) Internationale Anmeldenummer: PCT/EP2003/013337
(87) Internationale Veröffentlichungsnummer: WO 2004/057163

(56) Entgegenhaltungen:
- DE-U- 8 518 157
- GB-A- 687 125
- US-A- 4 662 320
- US-A- 5 305 718

## Beschreibung

### Gebiet der Erfindung

Die Erfindung betrifft eine Brennkraftmaschine mit einer Vorrichtung zur hydraulischen Drehwinkelverstellung ihrer Nockenwelle gegenüber ihrer Kurbelwelle sowie mit einer Vakuumpumpe für einen Servoverbraucher, insbesondere für eine Bremskraftverstärker, nach den oberbegriffsbildenden Merkmalen des Patentanspruchs 1.

### Hintergrund der Erfindung

Dem Fachmann auf dem Gebiet der Kraftfahrzeugtechnik ist es allgemein bekannt, dass moderne Brennkraftmaschinen neben einer Vielzahl von Aggregaten auch mit einer Vorrichtung zur hydraulischen Drehwinkelverstellung ihrer Nockenwelle gegenüber ihrer Kurbelwelle sowie mit einer Vakuumpumpe für einen Servoverbraucher ausgerüstet sind, um einerseits mit der Vorrichtung die Öffnungs- und Schließzeiten der Gaswechselventile der Brennkraftmaschine stufenlos verändern zu können und andererseits mit der Vakuumpumpe beispielsweise den für einen Bremskraftverstärker eines Kraftfahrzeuges notwendigen Unterdruck zu erzeugen.

Die üblicherweise verwendeten Vorrichtungen zur Drehwinkelverstellung sind dabei im Prinzip als hydraulischer Stellantrieb ausgebildet, der entweder als sogenannter Axialkolbenversteller oder ähnlich wie die aus der EP 0 818 609 B1 bekannte Vorrichtung als sogenannter Rotationskolbenversteller ausgeführt ist. Diese Vorrichtung ist am antriebsseitigen Ende der in mehreren Radiallagern im Zylinderkopf der Brennkraftmaschine gelagerten Nockenwelle angeordnet und besteht im Wesentlichen aus einer mit der Kurbelwelle der Brennkraftmaschine in Antriebsverbindung stehenden Antriebseinheit und aus einer drehfest mit der Nockenwelle der Brennkraftmaschine verbundenen Abtriebseinheit. Die Abtriebseinheit ist dabei konkret als Flügelrad ausgebildet und durch eine axiale Zentralschraube an der Nockenwelle befestigt, während die Antriebseinheit als die Abtriebseinheit umschließender Hohlzylinder ausgebildet ist, der durch zwei axiale Seitenwände druckmitteldicht verschließbar ist. Durch vier radiale Begrenzungswände in der Antriebseinheit und vier radiale Flügel an der Abtriebseinheit werden dann innerhalb der Vorrichtung zwischen jeweils zwei Begrenzungswänden jeweils zwei wahlweise oder gleichzeitig mit einem hydraulischen Druckmittel beaufschlagbare Druckkammern gebildet, über welche die Antriebseinheit mit der Abtriebseinheit in Kraftübertragungsverbindung steht. Als hydraulisches Druckmittel für die Vorrichtung wird dabei das aus einem der Radiallager der Nockenwelle entnommene Schmieröl der Brennkraftmaschine verwendet, welches über radiale und axiale Ölkanäle der Vorrichtung zugeführt wird.

Die bei Brennkraftmaschinen üblicherweise verwendeten Vakuumpumpen für einen Servoverbraucher sind dagegen zumeist als Flügelzellenpumpe ausgebildet, wie sie beispielsweise aus der DE 85 18 157 U1 hervorgeht. Diese Vakuumpumpe ist auf einer gemeinsamen Längsachse mit der Nockenwelle am Zylinderkopf der Brennkraftmaschine angeordnet und besteht im Wesentlichen aus einem am Zylinderkopfdeckel der Brennkraftmaschine angeflanschten Gehäuse mit einem Lagerstutzen und aus einem in dem Gehäuse angeordneten Rotor mit einer Antriebswelle, die in dem in den Zylinderkopf der Brennkraftmaschine hineinragenden Lagerstutzen des Gehäuses drehbar gelagert ist. In die Stirnseite der Antriebswelle sind dabei zwei Ausnehmungen eingearbeitet, in die zwei an der Stirnseite der Nockenwelle angeformte Kupplungslappen eingreifen und somit die Drehbewegung der Nockenwelle auf die Antriebswelle der Vakuumpumpe übertragen. Zusätzlich weist die Nockenwelle noch einen zu deren Stirnseite führenden axialen Schmierölkanal auf, der einerseits über ein Kupplungsrohr mit einem axialen Schmierölsammelraum in der Antriebswelle der Vakuumpumpe und andererseits mit dem Schmierölkreislauf der Brennkraftmaschine verbunden ist, so dass die Vakuumpumpe zugleich mit dem Schmieröl der Brennkraftmaschine geschmiert wird.

Als nachteilig hat es sich jedoch erwiesen, dass es bei vielen Motorkonzepten aus Platzmangel keine andere kostengünstige Möglichkeit gibt, als die Vakuumpumpe für den Servoverbraucher gegenüber dem antriebsseitigen Ende der Nockenwelle bzw. einer der Nockenwellen der Brennkraftmaschine anzuordnen. Wenn an diesem Ende der Nockenwelle jedoch gleichzeitig eine Vorrichtung zur hydraulische Drehwinkelverstellung vorgesehen ist, ist ein Antrieb und eine Schmierung der Vakuumpumpe in der beschriebenen Weise über die Nockenwelle der Brennkraftmaschine nicht mehr möglich, so dass zumeist sehr kostenaufwändige Maßnahmen notwendig sind, den Antrieb und die Schmierung der Vakuumpumpe anderweitig zu realisieren. Dabei muss vor allem in Erwägung gezogen werden, die Vakuumpumpe in ihrem Aufbau derart zu ändern, dass sie in geeigneter Weise in den Primär- oder Sekundärtrieb der Brennkraftmaschine sowie in deren Schmierölkreislauf eingebunden werden kann, so dass in jedem Fall mit einem erheblichen Mehraufwand an Kosten für die Brennkraftmaschine zu rechnen ist.

### Aufgabe der Erfindung

Der Erfindung liegt deshalb die Aufgabe zugrunde, eine Brennkraftmaschine mit einer Vorrichtung zur Drehwinkelverstellung ihrer Nockenwelle gegenüber ihrer Kurbelwelle sowie mit einer Vakuumpumpe für einen Servoverbraucher, insbesondere für einen Bremskraftverstärker, zu konzipieren, bei welcher trotz einer am antriebsseitigen Ende ihrer Nockenwelle befestigten Vorrichtung zur Drehwinkelverstellung eine in üblicherweise am Zylinderkopf der Brennkraftmaschine angeordnete Vakuumpumpe mit einem kostengünstigen Antrieb und einfacher Schmierung verwendbar ist.

### Zusammenfassung der Erfindung

Erfindungsgemäß wird diese Aufgabe bei einer Brennkraftmaschine nach dem Oberbegriff des Anspruchs 1 derart gelöst, dass die Vakuumpumpe axial gegenüber der Vorrichtung zur Drehwinkelverstellung auf einer gemeinsamen Längsachse mit der Vorrichtung am Zylinderkopf der Brennkraftmaschine angeordnet und die Vorrichtung mit zusätzlichen Kupplungselementen ausgebildet ist, über welche die Antriebswelle der Vakuumpumpe mit der Vorrichtung in Antriebsverbindung steht, wobei die Schmierung der Vakuumpumpe über ein in ihrer Antriebswelle angeordnetes und die Vorrichtung hineinragendes, zentrisches Verbindungsrohr mit dem der Vorrichtung als Druckmittel zugeführten Schmieröl der Brennkraftmaschine erfolgt.

In zweckmäßiger Weiterbildung der erfindungsgemäß ausgebildeten Brennkraftmaschine wird dabei die an der Antriebswelle der Vakuumpumpe angeordnete Kupplung bevorzugt durch zwei koaxial an deren vorrichtungszugewandter Stirnseite angeordnete Radialzähne gebildet, während die zusätzlichen Kupplungselemente an der Vorrichtung bevorzugt als zwei zu den Radialzähnen an der Antriebswelle komplementäre Radialschlitze ausgebildet sind. Als besonderes vorteilhaft hat es sich erwiesen, die beiden Radialzähne als axial aus der vorrichtungszugewandten Stirnseite der Antriebswelle hervorspringende rechteckige Stege auszubilden, die um 180° versetzt zueinander bzw. sich gerade gegenüberliegend angeordnet sowie einteilig mit der Antriebswelle ausgebildet sind. Bei entsprechend komplementärer Ausbildung der gegenüberliegenden Seite der Vorrichtung zur Drehwinkelverstellung ist es jedoch auch möglich, mehr als zwei Radialzähne symmetrisch oder unsymmetrisch an der Stirnseite der Antriebswelle anzuordnen und/oder diese als gesonderte Teile, beispielsweise in entsprechenden Nuten oder auch als Stifte in entsprechenden Bohrungen, an der Stirnseite der Antriebswelle der Vakuumpumpe zu befestigen.

Die gegenüberliegende Seite der Vorrichtung zur Drehwinkelverstellung ist dann in weiterer Ausgestaltung der erfindungsgemäß ausgebildeten Brennkraftmaschine derart gestaltet, dass die axiale Zentralschraube der Vorrichtung mit ihrem zur Vakuumpumpe weisenden Schraubenkopf in einer Durchmessererweiterung ihrer Schraubenbohrung in der Abtriebseinheit der Vorrichtung versenkt angeordnet ist, wobei die nockenwellenabgewandte Seitenwand der Vorrichtung eine axiale Durchgangsbohrung mit dem gleichen Durchmesser wie die Durchmessererweiterung der Schraubenbohrung in der Antriebseinheit der Vorrichtung aufweist, durch welche die axiale Zentralschraube hindurchgeführt wird.

In einer ersten Ausführungsform der erfindungsgemäß ausgebildeten Brennkraftmaschine ist diese Durchmessererweiterung für den Schraubenkopf der Zentralschraube in der Abtriebseinheit mit einem der Ölkanäle zur Druckmittelversorgung der Vorrichtung verbundenen und durch einen in die gleich große Durchgangsbohrung in der nockenwellenabgewandten Seitenwand der Vorrichtung einschraubbaren Deckel öldicht verschließbar. Zu diesem Zweck ist der im Wesentlichen scheibenförmige Deckel an seiner Verschlußseite mit einem koaxialen Ringansatz mit einem Außengewinde ausgebildet, dessen Länge etwa der Dicke der in ihrer Durchgangsbohrung mit einem Innengewinde ausgebildeten nockenwellenabgewandten Seitenwand der Vorrichtung entspricht. Dieser Deckel weist dann die beiden Radialschlitze für die durch zwei Radialzähne an der Stirnseite der Antriebswelle gebildete Kupplung der Vakuumpumpe auf, die bevorzugt als zwei vom Rand des Deckels ausgehende sowie um 180° versetzt zueinander bzw. sich gerade gegenüberliegend angeordnete Grundnuten ausgebildet sind und über welche die Vakuumpumpe durch die Vorrichtung zur Drehwinkelverstellung angetrieben wird. Zusätzlich wird in einer zentrischen Axialbohrung in diesem Deckel das Verbindungsrohr der Vakuumpumpe zu der Vorrichtung zur Drehwinkelverstellung dichtend aufgenommen, durch welches eine Teilmenge des in die Durchmessererweiterung für den Schraubenkopf der Zentralschraube geleiteten Druckmittels der Vorrichtung leckagefrei als Schmieröl in die Vakuumpumpe weitergeleitet wird.

Als zweite Ausführungsform der erfindungsgemäß ausgebildeten Brennkraftmaschine wird es dagegen vorgeschlagen, die Durchmessererweiterung für den Schraubenkopf der Zentralschraube in der Abtriebseinheit der Vorrichtung nicht mit der Druckmittelversorgung der Vorrichtung zu verbinden und demzufolge auch nicht mit einem in die nockenwellenabgewandte Seitenwand der Vorrichtung einschraubbaren zusätzlichen Deckel zu verschließen. Zur Realisierung des Antriebs der Vakuumpumpe durch die Vorrichtung zur Drehwinkelverstellung sind bei dieser Ausführungsform die beiden Radialschlitze für die durch zwei Radialzähne an der Stirnseite der Antriebswelle gebildete Kupplung der Vakuumpumpe bevorzugt als direkt in die nockenwellenabgewandte Seitenwand der Vorrichtung eingearbeitete Grundnuten ausgebildet, die von der zur Durchmessererweiterung für den Schraubenkopf der Zentralschraube führenden Durchgangsbohrung in der Seitenwand der Vorrichtung ausgehen und ebenfalls um 180° versetzt zueinander bzw. sich gerade gegenüberliegend angeordnet sind. In der schraubenkopfseitigen Mündung einer zur Druckmittelversorgung der Vorrichtung vorgesehenen durchgehenden Längsbohrung in axialen Zentralschraube der Vorrichtung zur Drehwinkelverstellung ist dann das Verbindungsrohr der Vakuumpumpe zur Vorrichtung dichtend aufgenommen, durch welches ebenso wie bei der ersten Ausführungsform eine Teilmenge des in die Vorrichtung geleiteten Druckmittels leckagefrei als Schmieröl in de Vakuumpumpe weitergeleitet wird.

Die erfindungsgemäß ausgebildete Brennkraftmaschine mit einer Vorrichtung zur hydraulischen Drehwinkelverstellung ihrer Nockenwelle gegenüber ihrer Kurbelwelle sowie mit einer Vakuumpumpe für einen Servoverbraucher, insbesondere für einen Bremskraftverstärker, weist somit gegenüber den aus dem Stand der Technik bekannten Brennkraftmaschinen den Vorteil auf, dass es durch die Schaffung einer kostengünstigen Antriebsverbindung zwischen der Vorrichtung zur Drehwinkelverstellung und der Vakuumpumpe über eine formschlüssige Kupplung sowie durch die gleichzeitige Nutzung einer Teilmenge des Druckmittels der Vorrichtung als Schmieröl für die Vakuumpumpe über ein einfaches Verbindungsrohr zwischen der Vorrichtung und der Vakuumpumpe nunmehr möglich ist, trotz der am antriebsseitigen Ende der Nockenwelle angeordneten Vorrichtung zur Drehwinkelverstellung die Vakuumpumpe in üblicherweise auf einer gemeinsamen Längsachse mit der Nockenwelle am Zylinderkopfdeckel der Brennkraftmaschine anzuordnen. Dadurch muss die Vakuumpumpe weder in ihrem Aufbau noch in ihrer Anordnung einem anderen Antrieb und/oder einer anderen Schmierung angepasst werden, so dass der dafür erforderliche Mehraufwand an Kosten für die Brennkraftmaschine eingespart werden kann. Bei Weglassen des Verbindungsrohrs zwischen der Vakuumpumpe und der Vorrichtung zur Drehwinkelverstellung und Ausbildung des die Durchmessererweiterung in der Vorrichtung verschließenden Deckels ohne zentrische Axialbohrung beziehungsweise Ausbildung der Durchgangsbohrung in der Zentralschraube als Grundbohrung ist es jedoch auch möglich, nur den Antrieb der Vakuumpumpe in erfindungsgemäßer Weise durch die Vorrichtung zur Drehwinkelverstellung zu realisieren und für die Vakuumpumpe eine separate Schmierölversorgung vorzusehen.

### Kurze Beschreibung der Zeichnungen

Die Erfindung wird nachfolgend anhand zweier Ausführungsbeispiele näher erläutert und ist in den zugehörigen Zeichnungen schematisch dargestellt. Dabei zeigen:
- Figur 1: einen Teilquerschnitt durch den Zylinderkopf, einer ersten Ausführungsform der erfindungsgemäß ausgebildeten Brennkraftmaschine; maschine;
- Figur 2: eine Draufsicht auf die Vorrichtung zur Drehwinkelverstellung der ersten Ausführungsform der erfindungsgemäß ausgebildeten Brennkraftmaschine;
- Figur 3: einen Teilquerschnitt durch den Zylinderkopf einer zweiten Ausführungsform der erfindungsgemäß ausgebildeten Brennkraftmaschine;
- Figur 4: einen Draufsicht auf die Vorrichtung zur Drehwinkelverstellung der zweiten Ausführungsform der erfindungsgemäß ausgebildeten Brennkraftmaschine.

### Ausführliche Beschreibung der Zeichnungen

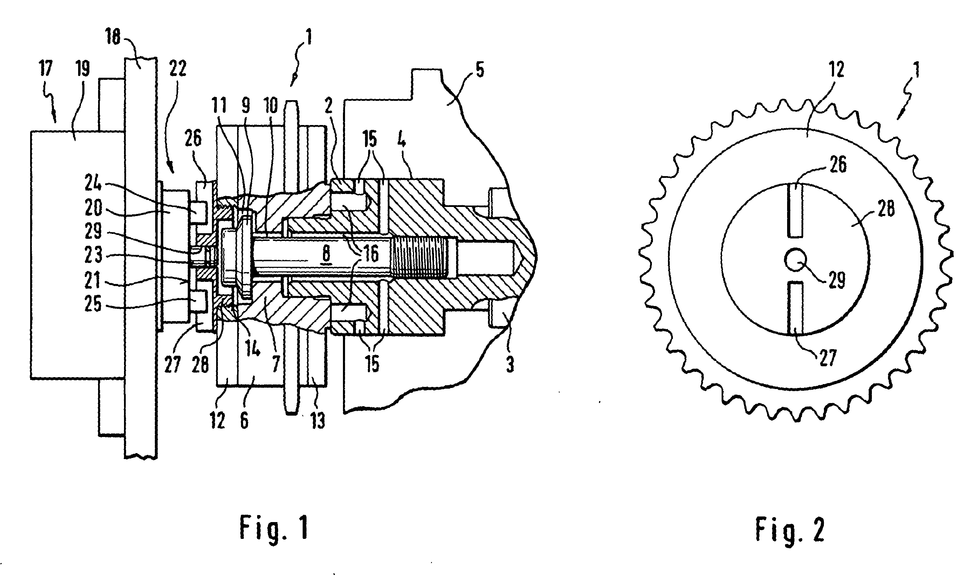

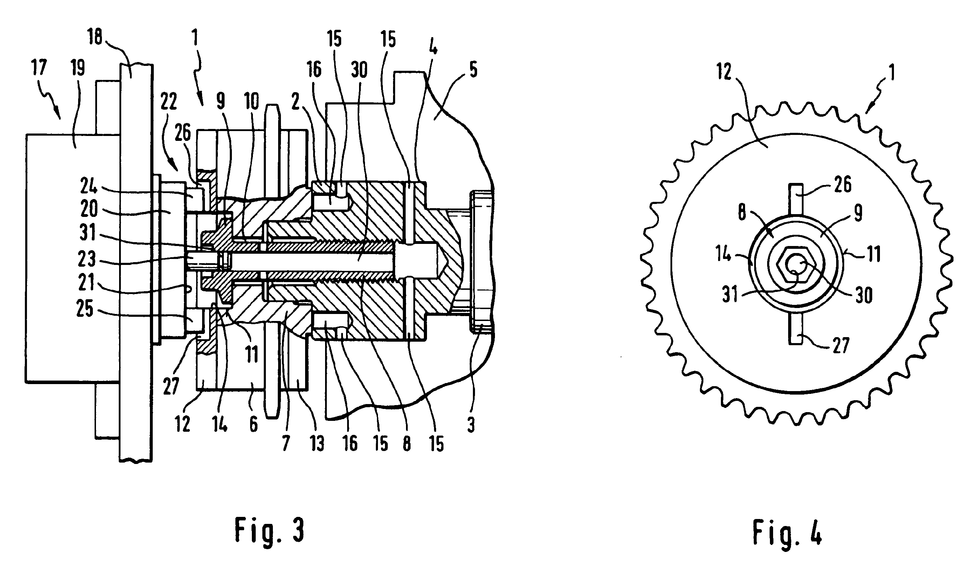

Die Figuren 1 und 3 zeigen jeweils eine Teilansicht einer Brennkraftmaschine, die sowohl eine Vorrichtung 1 zur hydraulischen Drehwinkelverstellung ihrer Nockenwelle 3 gegenüber ihrer Kurbelwelle als auch eine Vakuumpumpe 17 für einen Servoverbraucher, insbesondere für einen Bremskraftverstärker eines Kraftfahrzeuges aufweist. In beiden Figuren ist dabei deutlich zu sehen, dass die im Prinzip als hydraulischer Stellantrieb ausgebildete Vorrichtung 1 zur hydraulischen Drehwinkelverstellung am antriebsseitigen Ende 2 der in mehreren Radiallagern 4 im Zylinderkopf 5 der Brennkraftmaschine gelagerten Nockenwelle 3 angeordnet ist und im Wesentlichen aus einer mit der Kurbelwelle über ein Zugmittel in Antriebsverbindung stehenden Antriebseinheit 6 sowie aus einer drehfest mit der Nockenwelle 3 der Brennkraftmaschine verbundenen Abtriebseinheit 7 besteht. Die Abtriebseinheit 7 der Vorrichtung 1 ist dabei durch eine axiale Zentralschraube 8 am antriebsseitigen Ende 2 der Nockenwelle 3 befestigt, während die Antriebseinheit 6 durch einen die Abtriebseinheit 7 umschließenden Hohlzylinder gebildet wird, der durch zwei axiale Seitenwände 12, 13 druckmitteldicht verschlossen ist. Über mindestens zwei innerhalb der Vorrichtung 1 gebildete, wechselweise oder gleichzeitig mit einem hydraulischen Druckmittel beaufschlagbare Druckkammern steht dann die Antriebseinheit 6 mit der Abtriebseinheit 7 in Kraftübertragungsverbindung, wobei als hydraulisches Druckmittel für die Vorrichtung 1 das aus einem der Radiallager 4 der Nockenwelle entnommene Schmieröl der Brennkraftmaschine verwendet wird, welches über radiale und axiale Ölkanäle 15, 16 in der Nockenwelle 3 der Vorrichtung 1 zugeführt wird.
Die ebenfalls in den Figuren 1 und 3 schematisch dargestellte Vakuumpumpe 17 ist dagegen als Flügelzellenpumpe ausgebildet, die im Wesentlichen aus einem am Zylinderkopfdeckel 18 der Brennkraftmaschine angeflanschten Gehäuse 19 und aus einem in dem Gehäuse 19 angeordneten Rotor mit einer Antriebswelle 20 besteht, die in den Zylinderkopf 5 der Brennkraftmaschine hineinragt und stirnseitig eine Kupplung 22 zur Übertragung einer Drehbewegung aufweist. Da die übliche Übertragung der Drehbewegung der Nockenwelle 3 auf die Vakuumpumpe 17 sowie die Schmierung derselben mit dem Schmieröl der Brennkraftmaschine über die Antriebswelle 20 der Vakuumpumpe 17 durch die am antriebsseitigen Ende 2 der Nockenwelle 3 angeordnete Vorrichtung 1 zur Drehwinkelverstellung nicht mehr möglich ist, ist die Vakuumpumpe 17 erfindungsgemäß axial gegenüber der Vorrichtung 1 auf einer gemeinsamen Längsachse mit dieser angeordnet und die Vorrichtung 1 mit zusätzlichen Kupplungselementen ausgebildet, über welche die Antriebswelle 20 der Vakuumpumpe 17 mit der Vorrichtung 1 nunmehr in Antriebsverbindung steht. Die Schmierung der Vakuumpumpe 17 erfolgt dabei erfindungsgemäß über ein gleichfalls in den Figuren 1 und 3 sichtbares, in der Antriebswelle 20 der Vakuumpumpe 17 angeordnetes Verbindungsrohr 23, welches in die Vorrichtung 1 hineinragt und eine Teilmenge des der Vorrichtung 1 als Druckmittel zugeführten Schmieröls der Brennkraftmaschine in die Vakuumpumpe 17 weiterleitet.

Desweiteren geht aus den Figuren 1 und 3 hervor, dass die an der Antriebswelle 20 der Vakuumpumpe 17 angeordnete Kupplung 22 zur Übertragung einer Drehbewegung durch zwei koaxial an deren vorrichtungszugewandter Stirnseite 21 angeordnete Radialzähne 24, 25 gebildet wird, während die zusätzlichen Kupplungselemente an der Vorrichtung 1 als zwei an der der Antriebswelle 20 gegenüberliegenden Seite der Vorrichtung 1 angeordnete und zu den Radialzähnen 24, 25 an der Antriebswelle 20 komplementäre Radialschlitze 26, 27 ausgebildet sind, in welche die Radialzähne 24, 25 einsteckbar sind. Die gegenüberliegende Seite der Vorrichtung 1 zur Drehwinkelverstellung ist dabei derart ausgebildet, dass die axiale Zentralschraube 8 der Vorrichtung 1 mit ihren Schraubenkopf 9 in einer Durchmessererweiterung 11 ihrer Schraubenbohrung 10 in der Antriebseinheit 7 der Vorrichtung 1 versenkt angeordnet ist und das die nockenwellenabgewandte Seitenwand 12 der Vorrichtung 1 eine axiale Durchgangsbohrung 14 gleichen Durchmessers aufweist, durch welche die axiale Zentralschraube 8 hindurch geführt wird.

In der in den Figuren 1 und 2 dargestellten ersten Ausführungsform der erfindungsgemäß ausgebildeten Brennkraftmaschine ist diese Durchmessererweiterung 11 für den Schraubenkopf 9 der Zentralschraube 8 deutlich sichtbar mit einem der axialen Ölkanäle 16 zur Druckmittelversorgung der Vorrichtung 1 verbunden und durch einen in die Durchgangsbohrung 14 in der nockenwellenabgewandten Seitenwand 12 der Vorrichtung 1 einschraubbaren Deckel 28 öldicht verschlossen. Dieser Deckel 28 an der nockenwellenabgewandten Seitenwand 12 der Vorrichtung 1 weist dann die beiden Radialschlitze 26, 27 für die Kupplung 22 der Vakuumpumpe 17 auf, die, wie in Figur 2 zu sehen ist, als zwei vom Rand des Deckels 28 ausgehende und sich gerade gegenüberliegend angeordneten Grundnuten ausgebildet sind. Zusätzlich wird in einer zentrischen Axialbohrung 29 in diesem Deckel 28 das Verbindungsrohr 23 der Vakuumpumpe 17 zur Vorrichtung 1 dichtend aufgenommen, durch welches eine Teilmenge des in die Durchmessererweiterung 11 für den Schraubenkopf 9 der Zentralschraube 8 geleiteten Druckmittels der Vorrichtung 1 als Schmieröl in die Vakuumpumpe 17 weitergeleitet wird.

Bei der in den Figuren 3 und 4 dargestellten zweiten Ausführungsform der erfindungsgemäß ausgebildeten Brennkraftmaschine ist die Durchmessererweiterung 11 für den Schraubenkopf 9 der Zentralschraube 8 dagegen deutlich sichtbar nicht mit der Druckmittelversorgung der Vorrichtung 1 verbunden, da für die Druckmittelversorgung der Vorrichtung 1 eine durchgehende Längsbohrung 30 in der axialen Zentralschraube 8 vorgesehen ist. Da somit auch kein Deckel 28 zum Verschließen der Durchmessererweiterung 11 bzw. der Durchgangsbohrung 14 in der nockenwellenabgewandten Seitenwand 12 der Vorrichtung 1 notwendig ist, sind die Radialschlitze 26, 27 für die Kupplung 22 der Vakuumpumpe 17 bei dieser Ausführungsform als direkt in die nockenwellenabgewandten Seitenwand 12 der Vorrichtung 1 eingearbeitete Grundnuten ausgebildet, die, wie Figur 4 deutlich zeigt, von der Durchgangsbohrung 14 zur Durchmessererweiterung 11 in den Antriebseinheit 7 ausgehen und sich gerade gegenüberliegend angeordnet sind. In der schraubenkopfseitigen Mündung 31 der Längsbohrung 30 in der Zentralschraube 8 der Vorrichtung 1 ist dann das Verbindungsrohr 23 der Vakuumpumpe zur Vorrichtung 1 dichtend aufgenommen, durch welches eine Teilmenge des in die Vorrichtung 1 geleiteten Druckmittels als Schmieröl in die Vakuumpumpe 17 weitergeleitet wird.

### Bezugszahlenliste

- 1: Vorrichtung
- 2: antriebsseitiges Ende
- 3: Nockenwelle
- 4: Radiallager
- 5: Zylinderkopf
- 6: Antriebseinheit
- 7: Abtriebseinheit
- 8: Zentralschraube
- 9: Schraubenkopf
- 10: Schraubenbohrung
- 11: Durchmessererweiterung
- 12: Seitenwand
- 13: Seitenwand
- 14: Durchgangsbohrung
- 15: radiale Ölkanäle
- 16: axiale Ölkanäle
- 17: Vakuumpumpe
- 18: Zylinderkopfdeckel
- 19: Gehäuse
- 20: Antriebswelle
- 21: Stirnseite
- 22: Kupplung
- 23: Verbindungsrohr
- 24: Radialzahn
- 25: Radialzahn
- 26: Radialschlitz
- 27: Radialschlitz
- 28: Deckel
- 29: Axialbohrung
- 30: Längsbohrung
- 31: Mündung

## Patentansprüche

1. Brennkraftmaschine mit einer Vorrichtung zur hydraulischen Drehwinkelverstellung ihrer Nockenwelle gegenüber ihrer Kurbelwelle sowie mit einer Vakuumpumpe für einen Servoverbraucher, insbesondere für einen Bremskraftverstärker, mit folgenden Merkmalen:
■ die Vorrichtung (1) zur hydraulischen Drehwinkelverstellung ist am antriebsseitigen Ende (2) der in mehreren Radiallagern (4) im Zylinderkopf (5) der Brennkraftmaschine gelagerten Nockenwelle (3) angeordnet und im Prinzip als hydraulischer Stellantrieb ausgebildet,
■ die Vorrichtung (1) besteht im Wesentlichen aus einer mit der Kurbelwelle der Brennkraftmaschine in Antriebsverbindung stehenden Antriebseinheit (6) und aus einer drehfest mit der Nockenwelle (3) der Brennkraftmaschine verbundenen Abtriebseinheit (7),
■ die Abtriebseinheit (7) ist durch eine axiale Zentralschraube (8) an der Nockenwelle (3) befestigt und die Antriebseinheit (6) ist als die Abtriebseinheit (7) umschließender Hohlzylinder ausgebildet, der durch zwei axiale Seitenwände (12, 13) druckmitteldicht verschlossen ist,
■ die Antriebseinheit (6) steht mit der Abtriebseinheit (7) der Vorrichtung (1) über mindestens zwei innerhalb der Vorrichtung (1) gebildete, wechselweise oder gleichzeitig mit einem hydraulischen Druckmittel beaufschlagbare Druckkammern in Kraftübertragungsverbindung,
■ als hydraulisches Druckmittel für die Vorrichtung (1) wird das aus einem der Radiallager (4) der Nockenwelle (3) entnommene Schmieröl der Brenn-kraftmaschine verwendet, welches über radiale und axiale Ölkanäle (15, 16) in der Nockenwelle (3) der Vorrichtung (1) zugeführt wird,
■ die Vakuumpumpe (17) für den Servoverbraucher ist als Flügelzellenpumpe ausgebildet und besteht im Wesentlichen aus einem am Zylinderkopfdeckel (18) der Brennkraftmaschine angeflanschten Gehäuse (19) und aus einem darin angeordneten Rotor mit einer Antriebswelle (20),
■ über die in den Zylinderkopf (5) der Brennkraftmaschine hineinragende und mit einer stirnseitigen Kupplung (22) ausgebildete Antriebswelle (20) erfolgt die Übertragung der Drehbewegung der Nockenwelle (3) auf die Vakuumpumpe (17) sowie deren Schmierung mit dem Schmieröl der Brennkraftmaschine,
**dadurch gekennzeichnet, dass**
■ die Vakuumpumpe (17) axial gegenüber der Vorrichtung (1) auf einer gemeinsamen Längsachse mit dieser angeordnet und die Vorrichtung (1) mit zusätzlichen Kupplungselementen ausgebildet ist, über welche die Antriebswelle (20) der Vakuumpumpe (17) mit der Vorrichtung (1) in Antriebsverbindung steht,
■ wobei die Schmierung der Vakuumpumpe (17) über ein in ihrer Antriebswelle (20) angeordnetes und in die Vorrichtung (1) hineinragendes, zentrisches Verbindungsrohr (23) mit dem der Vorrichtung (1) als Druckmittel zugeführten Schmieröl der Brennkraftmaschine erfolgt.

2. Vorrichtung nach Anspruch 1, **dadurch gekennzeichnet, dass** die an der An-triebswelle (20) der Vakuumpumpe (17) angeordnete Kupplung (22) bevorzugt durch zwei koaxial an deren vorrichtungszugewandter Stirnseite (21) angeordnete Radialzähne (24, 25) und die zusätzlichen Kupplungselemente an der Vorrichtung (1) bevorzugt durch zwei komplementäre Radialschlitze (26, 27) gebildet werden.

3. Vorrichtung nach Anspruch 2, **dadurch gekennzeichnet, dass** die axiale Zentralschraube (8) mit ihrem Schraubenkopf (9) in einer Durchmessererweiterung (11) ihrer Schraubenbohrung (10) in der Abtriebseinheit (7) versenkt angeordnet ist und die nockenwellenabgewandte Seitenwand (12) der Vorrichtung (1) eine axiale Durchgangsbohrung (14) gleichen Durchmessers aufweist.

4. Vorrichtung nach Anspruch 3, **dadurch gekennzeichnet, dass** die Durchmessererweiterung (11) für den Schraubenkopf (9) der Zentralschraube (8) mit einem der Ölkanäle (16) zur Druckmittelversorgung der Vorrichtung (1) verbunden und durch einen in die nockenwellenabgewandte Seitenwand (12) der Vorrichtung (1) einschraubbaren Deckel (28) öldicht verschließbar ist.

5. Vorrichtung nach Anspruch 4, **dadurch gekennzeichnet, dass** der Deckel (28) an der nockenwellenabgewandten Seitenwand (12) der Vorrichtung (1) mit den Radialschlitzen (26, 27) für die Kupplung (22) der Vakuumpumpe (17) ausgebildet ist und eine zentrische Axialbohrung (29) aufweist, in der das Verbindungsrohr (23) der Vakuumpumpe (17) zur Vorrichtung (1) dichtend aufgenommen ist.

6. Vorrichtung nach Anspruch 3, **dadurch gekennzeichnet, dass** die Radialschlitze (26, 27) für die Kupplung (22) der Vakuumpumpe (17) bevorzugt als direkt in die nockenwellenabgewandte Seitenwand (12) der Vorrichtung (1) eingearbeitete, von der Durchgangsbohrung (14) zur Durchmessererweiterung (11) in der Abtriebseinheit (7) ausgehende Grundnuten ausgebildet sind.

7. Vorrichtung nach Anspruch 6, **dadurch gekennzeichnet, dass** die axiale Zentralschraube (8) eine zur Druckmittelversorgung der Vorrichtung (1) vorgesehene durchgehende Längsbohrung (30) aufweist, in deren schraubenkopfseitiger Mündung (31) das Verbindungsrohr (23) der Vakuumpumpe (17) zur Vorrichtung (1) dichtend aufgenommen ist.

## Claims

1. Internal combustion engine with a device for hydraulically adjusting an angle of rotation of the camshaft thereof with respect to the crankshaft thereof, and with a vacuum pump for a servo load, in particular for a brake booster, the device having the following features:
■ the device (1) for hydraulically adjusting an angle of rotation is arranged on the drive end (2) of the camshaft (3), which is mounted in a plurality of radial bearings (4) in the cylinder head (5) of the internal combustion engine, and the device (1) is in principle in the form of a hydraulic actuator;
■ the device (1) consists substantially of a drive unit (6) in driving connection to the crankshaft of the internal combustion engine and of a driven unit (7) connected non-rotatably to the camshaft (3) of the internal combustion engine;
■ the driven unit (7) is fixed to the camshaft (3) by an axial central screw (8) and the drive unit (6) is configured as a hollow cylinder enclosing the driven unit (7), which hollow cylinder is closed in a pressure medium-tight manner by two axial side walls (12, 13);
■ the drive unit (6) is in power-transmitting connection to the driven unit (7) of the device (1) via at least two pressure chambers formed inside the device (1), which pressure chambers are alternately or simultaneously pressurisable with a hydraulic pressure medium;
■ the lubricating oil of the internal combustion engine drawn from one of the radial bearings (4) of the camshaft (3) is used as the hydraulic pressure medium for the device (1), which lubricating oil is supplied to the device (1) via radial and axial oil passages (15, 16) in the camshaft (3);
■ the vacuum pump (17) for the servo load is in the form of a vane-cell pump and consists substantially of a housing (19) flange-mounted to the cylinder head cover (18) of the internal combustion engine and of a rotor with a drive shaft (20) arranged in said housing (19);
■ the rotary motion of the camshaft (3) is transmitted to the vacuum pump (17) via the drive shaft (20), which projects into the cylinder head (5) of the internal combustion engine and is configured with an end coupling (22), and the vacuum pump (17) is lubricated with the lubricating oil of the internal combustion engine,
**characterized in that**
■ the vacuum pump (17) is arranged axially opposite the device (1) on a common longitudinal axis therewith and the device (1) is configured with additional coupling elements via which the drive shaft (20) of the vacuum pump (17) is in driving connection to the device (1),
■ the lubrication of the vacuum pump (17) being effected, via a central connecting tube (23) arranged in the drive shaft (20) thereof and projecting into the device (1), with the lubricating oil of the internal combustion engine which is supplied to the device (1) as the pressure medium.

2. Device according to Claim 1, **characterized in that** the coupling (22) arranged on the drive shaft (20) of the vacuum pump (17) is preferably formed by two radial teeth (24, 25) arranged coaxially on the end face (21) of the coupling (22) oriented towards the device, and the additional coupling elements on the device (1) are preferably formed by two complementary radial slots (26, 27).

3. Device according to Claim 2, **characterized in that** the head (9) of the axial central screw (8) is recessed in the driven unit (7) in a widened portion (11) of the diameter of its screw-bore (10) and the side wall (12) of the device (1) oriented away from the camshaft has an axial through-bore (14) of the same diameter.

4. Device according to Claim 3, **characterized in that** the widened portion (11) of the diameter for the head (9) of the central screw (8) is connected to one of the oil passages (16) for supplying pressure medium to the device (1) and is closable in an oil-tight manner by a cover (28) which can be screwed into the side wall (12) of the device (1) oriented away from the camshaft.

5. Device according to Claim 4, **characterized in that** the cover (28) is configured, on the side wall (12) of the device (1) oriented away from the camshaft, with the radial slots (26, 27) for the coupling (22) of the vacuum pump (17) and has a central axial bore (29) in which the connecting tube (23) of the vacuum pump (17) is received in a sealed manner with respect to the device (1).

6. Device according to Claim 3, **characterized in that** the radial slots (26, 27) for the coupling (22) of the vacuum pump (17) are preferably configured as base grooves worked directly into the side wall (12) of the device (1) oriented away from the camshaft and starting from the through-bore (14) to the widened portion (11) of the diameter in the driven unit (7).

7. Device according to Claim 6, **characterized in that** the axial central screw (8) has a longitudinal through-bore (30) provided for supplying pressure medium to the device (1), in the mouth (31) of which through-bore (30) at the screw-head end the connecting tube (23) of the vacuum pump (17) is received in a sealed manner with respect to the device (1).

## Revendications

1. Moteur à combustion interne comportant un dispositif de réglage hydraulique de l'angle de rotation de l'arbre à cames par rapport au vilebrequin ainsi qu'une pompe à vide destinée à un servorécepteur, notamment à un amplificateur de freinage, avec les caractéristiques suivantes :
- le dispositif (1) de réglage hydraulique de l'angle de rotation est disposé à l'extrémité (2) côté entraînement de l'arbre à cames (3) monté dans plusieurs paliers radiaux (4) dans la culasse (5) du moteur à combustion interne et est réalisé dans son principe sous forme de servo-entraînement hydraulique,
- le dispositif (1) est constitué pour l'essentiel d'une unité menante (6) se trouvant en liaison d'entraînement avec le vilebrequin du moteur à combustion interne et d'une unité menée (7) liée en rotation à l'arbre à cames (3) du moteur à combustion interne,
- l'unité menée (7) est fixée par une vis centrale axiale (8) sur l'arbre à cames (3) et l'unité menante (6) est réalisée sous forme de cylindre creux qui entoure l'unité menée (7) et est fermé en étanchéité au fluide sous pression par deux parois latérales axiales (12, 13),
- l'unité menante (6) se trouve en liaison de transmission de force avec l'unité menée (7) du dispositif (1) par l'intermédiaire d'au moins deux chambres de pression formées à l'intérieur du dispositif (1) et alimentées alternativement ou simultanément en fluide hydraulique sous pression,
- comme fluide hydraulique sous pression pour le dispositif (1), on utilise l'huile de lubrification du moteur à combustion interne, prélevée d'un des paliers radiaux (4) de l'arbre à cames (3), qui est apportée au dispositif (1) par l'intermédiaire de canaux d'huile radiaux et axiaux (15, 16) dans l'arbre à cames (3),
- la pompe à vide (17) pour le servorécepteur est réalisée sous forme de pompe rotative à ailettes et est constituée pour l'essentiel d'un carter (19) flasqué sur le couvercle de culasse (18) du moteur à combustion interne, et d'un rotor disposé dans ce carter et pourvu d'un arbre d'entraînement (20),
- la transmission du mouvement de rotation de l'arbre à cames (3) à la pompe à vide (17), et la lubrification de cette dernière avec l'huile de lubrification du moteur à combustion interne, s'effectuent par l'intermédiaire de l'arbre d'entraînement (20) pénétrant dans la culasse (5) du moteur à combustion interne et doté d'un accouplement (22) sur un côté frontal,
**caractérisé en ce que**
- la pompe à vide (17) est disposée axialement par rapport au dispositif (1) sur un axe longitudinal commun avec ce dernier, et le dispositif (1) est réalisé avec des éléments d'accouplement supplémentaires par l'intermédiaire desquels l'arbre d'entraînement (20) de la pompe à vide (17) se trouve en liaison d'entraînement avec le dispositif (1),
- sachant que la lubrification de la pompe à vide (17) s'effectue avec l'huile de lubrification du moteur à combustion interne apportée en tant que fluide sous pression au dispositif (1), au moyen d'un tube de liaison central (23) disposé dans l'arbre d'entraînement (20) de la pompe et pénétrant dans le dispositif (1).

2. Dispositif selon la revendication 1, **caractérisé en ce que** l'accouplement (22) disposé sur l'arbre d'entraînement (20) de la pompe à vide (17) est de préférence formé par deux dents radiales (24, 25) disposées coaxialement sur le côté frontal (21) de l'arbre qui est tourné vers le dispositif, et les éléments d'accouplement supplémentaires sur le dispositif (1) sont de préférence formés par deux fentes radiales complémentaires (26, 27).

3. Dispositif selon la revendication 2, **caractérisé en ce que** la vis centrale axiale (8) est disposée en étant noyée par sa tête de vis (9) dans un élargissement de diamètre (11) de son trou de vis (10) dans l'unité menée (7), et la paroi latérale (12) du dispositif (1) qui est éloignée de l'arbre à cames présente un trou débouchant axial (14) de même diamètre.

4. Dispositif selon la revendication 3, **caractérisé en ce que** l'élargissement de diamètre (11) pour la tête de vis (9) de la vis centrale (8) est relié à un des canaux d'huile (16) pour l'alimentation en fluide sous pression du dispositif (1) et peut être fermé en étanchéité à l'huile par un bouchon (28) pouvant être vissé dans la paroi latérale (12) du dispositif (1) qui est éloignée de l'arbre à cames.

5. Dispositif selon la revendication 4, **caractérisé en ce que** le bouchon (28) sur la paroi latérale (12) du dispositif (1) qui est éloignée de l'arbre à cames est réalisé avec les fentes radiales (26, 27) pour l'accouplement (22) de la pompe à vide (17) et présente un perçage axial central (29) dans lequel le tube (23) de liaison de la pompe à vide (17) au dispositif (1) est reçu en étanchéité.

6. Dispositif selon la revendication 3, **caractérisé en ce que** les fentes radiales (26, 27) pour l'accouplement (22) de la pompe à vide (17) sont de préférence réalisées sous forme de rainures borgnes directement ménagées dans la paroi latérale (12) du dispositif (1) qui est éloignée de l'arbre à cames, qui s'étendent depuis le trou débouchant (14) vers l'élargissement de diamètre (11) dans l'unité menée (7).

7. Dispositif selon la revendication 6, **caractérisé en ce que** la vis centrale axiale (8) présente un perçage longitudinal débouchant (30) prévu pour l'alimentation en fluide sous pression du dispositif (1), le tube de liaison (23) de la pompe à vide (17) étant reçu en étanchéité vis-à-vis du dispositif (1) dans l'embouchure (31) côté tête de vis de ce perçage.
